# EUROPÄISCHE PATENTSCHRIFT

(11) **EP 0 440 896 B1**
(45) Veröffentlichungstag und Bekanntmachung des Hinweises auf die Patenterteilung: **19.01.1994**
(21) Anmeldenummer: 90122256.2
(22) Anmeldetag: 22.11.1990
(51) Int. Cl.: F16B 13/10

(54) **Befestigungselement**
Fastening element
Elément de fixation

(30) Priorität: 06.04.1990 DE 4011229; 30.01.1990 DE 4002687; 26.09.1990 DE 4030498
(43) Veröffentlichungstag der Anmeldung: 14.08.1991
(73) Patentinhaber: fischerwerke Artur Fischer GmbH & Co. KG, D-72178 Waldachtal (DE)
(72) Erfinder: Fischer, Artur, Prof. Dr. h. c., W-7244 Waldachtal 3 (DE); Haug, Willi, W-7209 Freudenstadt (DE); Lind, Stefan, Dipl.-Ing., W-6749 Birkenhördt (DE)

(56) Entgegenhaltungen:
- DE-A- 3 312 141
- DE-A- 3 644 794
- FR-A- 2 441 082

## Beschreibung

Die Erfindung betrifft ein Befestigungselement gemäß der Gattung des Hauptanspruchs sowie eine Fassadenplatte gemäß der Gattung des Patentanspruchs 5.

Es sind Befestigungselemente bekannt, die formschlüssig in Bohrlöcher mit Hinterschneidung verankerbar sind. Eine auf einen Spreizkörper aufschiebbare Spreizhülse kann dabei in die Hinterschneidung im Bereich des Bohrlochgrundes formschlüssig eingreifen. Für Bohrlöcher mit sehr geringer Bohrlochtiefe sind diese Befestigungselemente jedoch wenig geeignet.

Zur Befestigung von Fassadenplatten, die nur eine geringe Plattenstärke aufweisen, können Bohrlöcher mit Hinterschneidung an der Rückseite der Fassadenplatte angebracht werden, die jedoch nur eine sehr geringe Bohrlochtiefe aufweisen. Herkömmliche Befestigungselemente mit Spreizhülsen sind für diesen Einsatzbereich wenig geeignet. Da in der Regel an jeder Fassadenplatte mehrere Befestigungselemente vorzusehen sind, sollten diese Befestigungselemente im Aufbau und in der Montage möglichst einfach sein. Der Erfindung liegt daher die Aufgabe zugrunde, ein Befestigungselement für hinterschnittene Bohrlöcher mit geringer Bohrlochtiefe zu schaffen, welches formschlüssig in das hinterschnittene Bohrloch einsetzbar ist und einen möglichst einfachen Aufbau hat. Das Befestigungselement sollte dabei insbesondere für die Befestigung von Fassadenplatten geeignet sein.

Die Lösung dieser Aufgabe wird mit den im Patentanspruch 1 aufgeführten Merkmalen erhalten. Zur Montage des Befestigungselement in einem Bohrloch mit Hinterschneidung ist es lediglich erforderlich, das Befestigungselement mit der Stirnfläche des Spreizkonus auf dem Bohrlochgrund aufzusetzen und dann den dachförmig abgebogenen Ring mit einem rohrförmigen Werkzeug niederzudrücken. Die Außenränder des Rings drücken sich dabei gegen die Bohrlochwand im Bereich der Hinterschneidung und verankern dadurch das Befestigungselement formschlüssig im Bohrloch. Das Befestigungselement besteht dabei im wesentlichen aus einem Gewindebolzen aus Stahl, an dessen einem Ende der Spreizkonus ausgebildet ist. Das dachförmig abgebogene Spreizelement ist ein im ungebogenen Zustand annähernd ovaler Ring aus Stahl. Im Biegebereich kann dieser Ring verjüngt ausgebildet sein, d.h. daß der Ring in der Mitte zwei gegenüberliegende Verjüngungen aufweist. Diese Verjüngungen erleichetern nicht nur das dachförmige Abbiegen des Rings, sonderen wirken beim Verspannen im Bohrloch als Stauchzone. Dadurch läßt sich der Ring optimal im Bereich der Hinterschneidung verspannen, ohne daß dabei zu hohe Spreizkräfte auftreten. Im Biegebereich können am Ring zwei gegenüberliegende Sicken eingeprägt sein, die ebenfalls das Abbiegen und ein optimales Verspannen im Bohrloch begünstigen.

Um eine Fassadenplatte mit sicheren Befestigungslementen, die dennoch einfach ausgebildet sind, zu erhalten, wird eine Fassadenplatte mit den Merkmalen des Anspruchs 5 vorgeschlagen. Eine mit den erfindungsgemäßen Befestigungselementen rückseitig bestückte Fassadenplatte läßt sich sehr sicher befestigen. Wird zusätzlich auf den Gewindeschaft eine Distanzhülse aufgesetzt, die am Spreizkonus oder am Ring aufliegt und geringfügig an der Rückseite der Fassadenplatte übersteht, so kann dadurch ein Ausreißen des Befestigungselements aus dem Bohrloch auch dann verhindert werden, wenn eine auf den Gewindestab aufgeschraubte Schraubenmutter mit an sich zu großem Drehmoment angezogen wird. Die dabei auftretenden Spannkräfte werden dann nämlich von der Distanzhülse aufgenommen.

Die Distanzhülse ist in ihrem Außendurchmesser an den Bohrlochdurchmesser angepaßt, so daß die Distanzhülse gleichzeitig auch das Befestigungselement im Bohrloch zentriert und am Befestigungselement angreifende Biegekräfte aufnimmt.

Statt einer Distanzhülse kann auch eine Kunststoffscheibe über den Gewindeschaft gestülpt sein. Die Kunststoffscheibe wird mit einer auf den Gewindeschaft aufgeschraubt en Mutter sowohl gegen das Spreizelement als auch gegen die Außenfläche der Fassadenplatte verspannt. Der in das Bohrloch eingreifende Zentrieransatz der Kunststoffscheibe drückt dabei auf die Erhöhungen der dachförmig abgebogenen Ringabschnitte, so daß durch plastische und elastische Verformung des Zentrieransatzes zum einen ein gleichmäßiger Druck auf das Spreizelement und zum anderen eine anhaltende und vibrationssichere Verspannung erreicht wird. Gleich-zeitig wird die Kunststoffscheibe mit ihrer Dichtungslippe fest gegen die Außenfläche der Fassadenplatte gepreßt, so daß eine optimale Abdichtung des Bohrloches gewährleistet ist. Über die Kunststoffscheibe wird ferner eine seitliche, aufgrund des Kunststoff-materials jedoch flexible Abstützung des Gewindebolzens erreicht.

Zur Erhöhung der Elastizität und Stauchfähigkeit der Kunststoffscheibe zum Ausgleich von Toleranzen der Bohrlochtiefe bzw. der Höhe des Spreizelementes ist es zweckmäßig, die dem Zentrieransatz gegenüberliegende Stirnseite der Kunststoffscheibe mit einer Vertiefung zu versehen. Aufgrund der Vertiefung kann sich nämlich die Kunststoffscheibe bis zur Anlage an der zur Verspannung dienenden Mutter durchbiegen.

Die Erfindung wird nachfolgend anhand in der Zeichnung dargestellter Ausführungsbeispiele näher erläutert.

Es zeigen:
Figur 1 ein in eine Fassadenplatte einzusetzendes Befestigungselement mit dachförmig abgebogenem Ring,
Figur 2 den Ring gemäß Figur 1 in ungebogenem Zustand von oben,
Figur 3 den Ring gemäß Figur 2 in der Seitenansicht,
Figur 4 eine Fassadenplatte mit verankertem Befestigungselement, auf das eine Distanzhülse aufgesetzt ist, und
Figur 5 ein weiteres Ausführungsbeispiel eines Distanzringes halbseitig geschnitten.
Figur 6 eine Ausführungsvariante des Spreizelementes.
Figur 7 das in der Fassadenplatte verankerte und mit einer Kunststoffscheibe verspannte Befestigungselement.

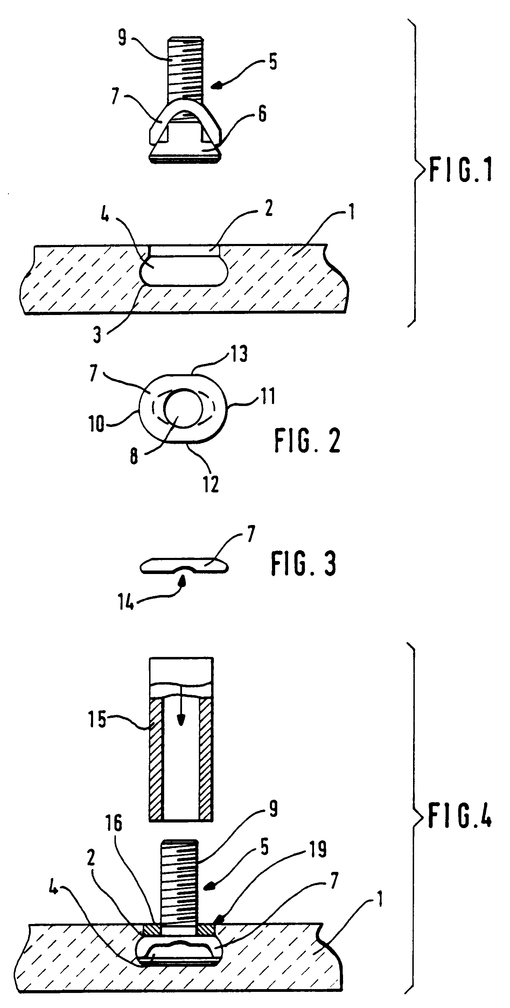

In Figur 1 ist eine Fassadenplatte 1 mit einem Bohrloch 2 ersichtlich, welches im Bereich des Bohrlochgrundes 3 eine Hinterschneidung 4 aufweist. Die Herstellung einer derartigen Hinterschneidung kann mittels herkömmlicher Ausreibvorrichtungen durchgeführt werden und ist nicht Gegenstand der vorliegenden Anmeldung.

In das Bohrloch 2 läßt sich ein Befestigungselement 5 mit seinem Spreizkonus 6 einsetzen. Oberhalb des Spreizkonus 6 befindet sich ein dachförmig abgebogener Ring 7, durch dessen Ringöffnung 8 (Figur 2) ein Gewindestab 9 nach oben ragt. Der Ring 7 ist so stark abgebogen, daß er zusammen mit dem Befestigungselement in die Bohrung 2 der im Schnitt dargestellten Fassadenplatte 1 einsetzbar ist.

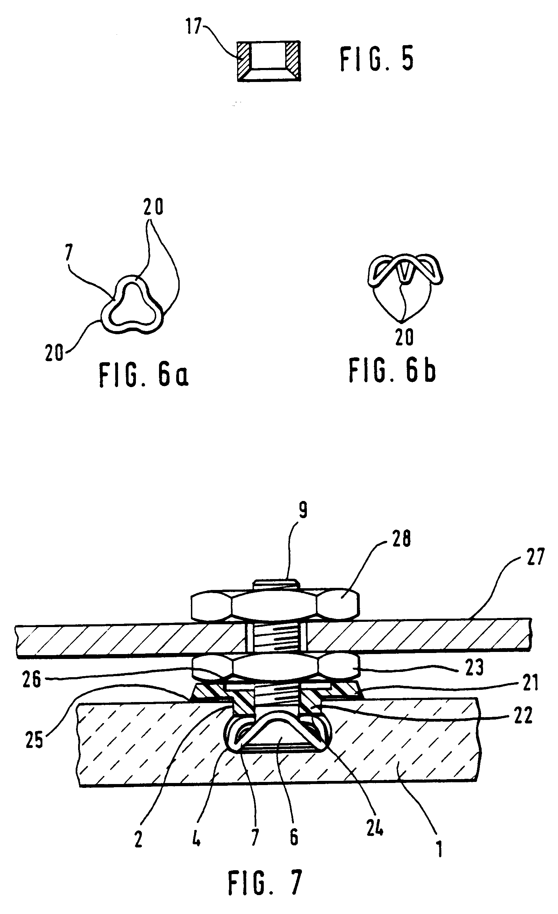

Im ungebogenen Zustand besitzt der Ring 7 eine in etwa ovale Form, wie dies in der Draufsicht von Figur 2 ersichtlich ist. Die beiden gegenüberliegenden runden Seiten 10, 11 sind deutlich breiter ausgeführt als die verjüngten geraden Abschnitte 12, 13. Die verjüngten Abschnitte 12, 13 erleichtern das Abbiegen des Ringes 7 und dienen gleichzeitig als Stauchzone beim Niederdrücken und Verspannen im Bohrloch (Figur 4).

In Figur 3 ist in der Seitenansicht ersichtlich, daß im Bereich der Verjüngungen an der Unterseite des Ringes 7 Sicken 14 ausgebildet sind. Die an beiden verjüngten Abschnitten 12, 13 befindlichen Sicken 14 erleichtern ebenfalls wie die Verjüngungen das dachförmige Abbiegen des Ringes 7 und erleichetern das Stauchen des Ringmaterials in diesen Bereichen.

In Figur 4 ist ein formschlüssig in eine Fassadenplatte 1 eingesetztes Befestigungselement gezeigt, wobei der niedergedrückte Ring 7 mit seinen Seitenrändern 10, 11 an der Bohrlochwand der Bohrung 2 im Bereich der Hinterschneidung 4 anliegt. Beim Niederdrücken des Ringes 7 kann nicht nur ein Aufweiten des Ringes in Richtung der gebogenen Seiten 10, 11 erfolgen, sondern auch ein Aufweiten im Bereich der Abschnitte 12, 13. Die Abschnitte 12, 13 kommen beim Niederdrücken auf dem Spreizkonus 6 zur Anlage auf dem sie von dem Montagewerkzeug 15 nach unten und damit nach außen gedrückt werden. Das Montagewerkezug 15 ist ein rohrförmiges Element, welches vor dem Aufbringen eines Distanzringes 16 auf das Befestigungselement 5 zum Niederdrücken des Ringes 7 in die in Figur 4 dargestellte Form aufgeschoben wird. Anschließend wir dann der Distanzring 16 auf den Gewindestab 9 aufgeschoben und in das Bohrloch 2 eingesetzt, wodurch eine Zentrierung und seitliche Abstützung des Gewindestabes 9 erreicht wird.

In Figur 5 ist eine andere Ausführung eines Distanzelements 17 angegeben. Die Bohrung dieses Distanzelementes 17 ist an die Form des Spreizkonus 6 angepaßt und kann somit weiter in das Bohrloch 2 eindringen und an der Oberseite des Ringes 7 zur Anlage kommen. Beide Distanzringe 16, 17 sind in ihren Abmessungen so ausgebildet, daß sie am Öffnungsrand 19 des Bohrlochs 2 geringfügig überstehen.

Die Ausführungsvariante des Spreizelementes nach Figur 6 weist drei dachförmig abgebogene Abschnitte des Ringes 7 auf. Die abgebogenen Enden 20 dieser Abschnitte liegen auf einer Ebene und demselben Kreisdurchmesser. Dadurch ergibt sich eine Dreipunktauflage der Enden 20 auf der konischen Mantelfläche des Spreizkonusses 6. Beim Niederdrücken des Spreizelementes zur Verankerung des Befestigungselementes 5 im Bohrloch 2 werden die drei Enden 20 gleichmäßig in die Hinterschneidung 4 eingebogen. Dadurch ergibt sich eine etwas günstigere Kraftverteilung und Zentrierung des Befestigungselementes 5 im Bohrloch.

Zur Verankerung des Gewindebolzens 9 in der mit einer Hinterschneidung 4 versehenen Bohrung 2 der Fassadenplatte 1 ist auf den Spreizkonus 6 des Gewindebolzens das Spreizelement 7 mittels eines Einschlagwerkzeuges aufgetrieben worden. Danach wird die Kunststoffscheibe 21 über den Schaft des Gewindebolzens 9 gestülpt, so daß der Zentrieransatz 22 in das Bohrloch 2 der Fassadenplatte 1 eingreift. Mit einer Mutter 23 wird nun die Kunststoffscheibe derart verspannt, daß zum einen die Stirnseite 24 des Zentrieransatzes 22 auf das Spreizelement 7 als auch die Dichtlippe 25 auf die Außenfläche der Fassadenplatte 1 drückt. Durch plastische Verformung der Stirnseite 24 des Zentrieransatzes 22 entsteht eine Verspannung, die das Spreizelement 7 ständig auf den Spreizkonus 6 drückt und somit die Verankerung sichert. Zum Ausgleich von Toleranzen sowohl der Bohrlochtiefe als auch der Höhe des Spreizelementes 7 weist die Kunststoffscheibe 21 zusätzlich eine Vertiefung 26 auf, die ein Durchbiegen der Kunststoffscheibe 21 ggf. bis zur Anlage an der Mutter 23 zuläßt.

Die Befestigung der Fassadenplatte 1 an den Träger 27 einer beispielsweise an einem Mauerwerk befestigten Unterkonstruktion erfolgt über eine weitere Mutter 28, zwischen der und der Mutter 23 der Träger 27 verspannt ist.

Es ist auch möglich, das Spreizelement 7 direkt mittels der Kunststoffscheibe 21 und der Mutter 23 auf den Spreizkonus 6 des Gewindebolzens aufzudrücken, so daß kein Einschlagwerkzeug zur Verankerung erforderlich ist.

## Patentansprüche

1. Befestigungselement aus Metall mit einem Gewindeschaft und einem in eine Hinterschneidung eines Bohrlochs mit geringer Bohrlochtiefe einsetzbaren Spreizkonus, auf den ein Spreizelement aufschiebbar ist, durch das der Gewindeschaft hindurchgreift, insbesondere als Befestigungselement für Fassadenplatten, **dadurch gekennzeichnet,** daß das Spreizelement ein dachförmig abgebogener, wenigstens annähernd ovaler metallischer Ring (7) ist, dessen abgebogene Enden (10, 11) auf der konischen Mantelfläche des Spreizkonus (6) aufliegen.

2. Befestigungselement nach Anspruch 1, **dadurch** **gekennzeichnet**, daß die Wandung des Ringes (7) im Biegebereich (12, 13) verjüngt ausgebildet ist.

3. Befestigungselement nach einem der Ansprüche 1 oder 2, **dadurch gekennzeichnet**, daß die Wandung des Ringes (7) im Biegebereich Sicken (14) aufweist.

4. Befestigungselement nach einem der vorhergehenden Ansprüche, **dadurch gekennzeichnet**, daß der Ring (7) im ungebogenen Zustand einen größeren maximalen Außendruchmesser hat als die Hinterschneidung (4) im Bohrloch (2), in das das Befestigungselement (5) einzusetzen ist.

5. Fassadenplatte mit wenigstens einem Bohrloch mit Hinterschneidung, in das ein Befestigungselement nach einem der vorhergehenden Ansprüche eingesetzt ist, **dadurch gekennzeichnet**, daß der Ring (7) auf den Spreizkonus (6) aufgedrückt ist und mit seinem Außenrand in der Hinterschneidung (4) an der Bohrlochwand anliegt.

6. Fassadenplatte nach Anspruch 5, **dadurch** **gekennzeichnet**, daß auf den Gewindeschaft (9) oberhalb des Ringes (7) eine Distanzhülse (16, 17) aufgesetzt ist, deren Außendurchmesser gleich dem Mindestdurchmesser des Bohrlochs (2) ist.

7. Fassadenplatte nach Anspruch 6, **dadurch** **gekennzeichnet,** daß die Distanzhülse (16, 17) sich einerseits am Spreizkonus (6) oder am aufgespreizten Ring (7) abstützt und andererseits am Öffnungsrand (19) des Bohrlochs (2) geringfügig übersteht.

8. Befestigungselement nach Anspruch 1, **dadurch** **gekennzeichnet**, daß das Spreizelement wenigstens drei dachförmig abgebogene Ringabschnitte aufweist, dessen abgebogene Enden (20) auf einer Ebene und demselben Kreisdurchmesser liegen.

9. Befestigungselement nach Anspruch 1, **dadurch** **gekennzeichnet**, daß über den Gewindeschaft (9) eine Kunststoffscheibe (21) gestülpt ist, deren auf der Fassadenplatte (1) aufsitzender Rand als Dichtungslippe (25) ausgebildet ist, und die einen in das Bohrloch (2) eingreifenden und auf das auf den Spreizkonus (6) aufgeschobene Spreizelement (7) drückenden Zentrieransatz (22) aufweist.

10. Befestigungselement nach Anspruch 9, **dadurch** **gegennzeichnet**, das die dem Zentrieransatz (22) gegenüberliegende Stirnseite der Kunststoffscheibe (21) mit einer Vertiefung (26) versehen ist.

11. Befestigungselement nach Anspruch 9 und 10, **dadurch** **gekennzeichnet**, daß die Höhe der Vertiefung (26) und der Dichtungslippe (25) etwa der Dicke der Kunststoffscheibe (21) im Bereich der Vertiefung entspricht.

## Claims

1. Securing element made of metal, having a threaded shaft and an expander cone insertable into an undercut in a drilled hole of little depth, onto which expander cone can be pushed an expansible element through which the threaded shaft passes, especially in the form of a securing element for facing boards, characterised in that the expansible element is an at least approximately oval metal ring (7) bent into a roof-shape, the bent-over ends (10, 11) of the ring resting on the conical outer surface of the expander cone (6).

2. Securing element according to claim 1, characterised in that the wall portion of the ring (7) has reduced dimensions in the bending region (12, 13).

3. Securing element according to claim 1 or claim 2, characterised in that the wall portion of the ring (7) has indentations (14) in the bending region.

4. Securing element according to any one of the preceding claims, characterised in that, in the unbent state, the ring (7) has a greater maximum external diameter than does the undercut (4) in the drilled hole (2) into which the securing element (5) is to be inserted.

5. Facing board having at least one drilled hole with an undercut into which a securing element according to any one of the preceding claims is inserted, characterised in that the ring (7) is pushed onto the expander cone (6) and the outer edge of the ring (7) rests in the undercut (4), against the wall of the drilled hole.

6. Facing board according to claim 5, characterised in that a spacer sleeve (16, 17) is placed over the threaded shaft (9), above the ring (7), the outer diameter of which sleeve is the same as the minimum diameter of the drilled hole (2).

7. Facing board according to claim 6, characterised in that the spacer sleeve (16, 17) is supported at one end on the expander cone (6) or on the expanded ring (7) and at the other end projects slightly at the edge (19) of the mouth of the drilled hole (2).

8. Securing element according to claim 1, characterised in that the expansible element has at least three ring portions bent over into a roof-shape, the bent-over ends (20) of which lie on one plane and on the same diameter.

9. Securing element according to claim 1, characterised in that a plastics disc (21) is placed over the threaded shaft (9), the edge of the disc that sits on the facing board (1) being in the form of a sealing lip (25), and the disc having a centering projection (22) that engages in the drilled hole (2) and presses on the expansible element (7) that has been pushed onto the expander cone (6).

10. Securing element according to claim 9, characterised in that the end face of the plastics disc (21) that is opposite the centering projection (22) is provided with a recess (26).

11. Securing element according to claims 9 and 10, characterised in that the height of the recess (26) and the sealing lip (25) corresponds approximately to the thickness of the plastics disc (21) in the region of the recess.

## Revendications

1. Elément métallique de fixation, destiné notamment à la fixation de panneaux de parement, et comportant une broche filetée et un cône d'expansion qui peut être placé dans un chambrage d'un trou de faible profondeur et sur lequel peut être glissé un élément expansible dans lequel la broche passe, élément de fixation caractérisé en ce que l'élément expansible est une rondelle métallique (7) au moins sensiblement ovale, repliée en forme de toit, dont les extrémités repliées (10, 11) reposent sur la surface conique du cône d'expansion (6).

2. Elément de fixation selon la revendication 1, caractérisé en ce que la paroi de la rondelle (7) est rétrécie à l'emplacement (12, 13) des pliures.

3. Elément de fixation selon l'une des revendications 1 ou 2, caractérisé en ce que la paroi de la rondelle (7) présente des rainures (14) à l'emplacement des pliures (12, 13).

4. Elément de fixation selon l'une des revendications précédentes, caractérisé en ce que la rondelle (7), présente à l'état aplati, un diamètre extérieur maximum plus grand que celui du chambrage (4) du trou (2), dans lequel cet élément de fixation (5) doit être placé.

5. Panneau de parement comportant au moins un trou qui présente un chambrage, dans lequel est placé un élément de fixation selon l'une des revendications précédentes, caractérisé en ce que la rondelle (7) est repoussée contre le cône d'expansion (6) et son bord extérieur est appliqué, dans le chambrage (4), contre la paroi du trou (2).

6. Panneau de parement selon la revendication 5, caractérisé en ce qu'une douille (16, 17) d'écartement, dont le diamètre extérieur est égal au diamètre minimum du trou (2), est placée sur la broche filetée (9) au-dessus de la rondelle (7).

7. Panneau de parement selon la revendication 6, caractérisé en ce que d'une part la douille (16, 17) d'écartement s'appuie, sur le côté d'expansion (6) ou sur la rondelle (7) dilatée et en ce que, d'autre part, elle dépasse légèrement du bord (19) de l'orifice du trou (2).

8. Elément de fixation selon la revendication 1, caractérisé en ce que l'élément expansible comporte au moins trois segments repliés en toit, dont les extrémités (20) repliées se trouvent dans un même plan et sur un même cercle.

9. Elément de fixation selon la revendication 1, caractérisé en ce que, sur la broche filetée (9) est inséré un disque (21) en matière plastique, dont le bord qui repose sur le panneau de parement forme une lèvre de joint (25) et qui comporte un épaulement (22) de centrage pénétrant dans le trou (2) et exerçant une poussée contre l'élément expansible (7) posé sur le cône d'expansion.

10. Elément de fixation selon la revendication 9, caractérisé en ce que la face du disque (21) qui est opposée à l'épaulement (22) présente une cavité (26).

11. Elément de fixation selon les revendications 9 et 10, caractérisé en ce que la somme de la profondeur de la cavité (26) et de l'épaisseur de la lèvre de joint (25) correspond sensiblement à l'épaisseur du disque (21) à l'emplacement de cette cavité.
